# EUROPEAN PATENT APPLICATION

(11) **EP 3 693 406 A1**
(43) Date of publication of application: **12.08.2020**
(21) Application number: 19156044.0
(22) Date of filing: 07.02.2019
(51) Int. Cl.: C08J 3/12, B29B 9/16

(54) **POLYMER SPHERES**

(71) Applicant: Nederlandse Organisatie voor toegepast- natuurwetenschappelijk onderzoek TNO, 2595 DA 's-Gravenhage (NL); Chemelot Scientific Participations B.V., 6167 RD Geleen (NL)
(72) Inventor: HEJMADY, Prakhyat, 5616 SC Eindhoven (NL); VAN BREEMEN, Lambért Cècile Angelo, 5672 VC Nuenen (NL); CARDINAELS, Ruth Maria, 3680 Maaseik (BE); ANDERSON, Patrick David, 52538 Selfkant (DE)
(74) Representative: V.O.

(57) **Abstract**

The present invention is directed to spherical polymer particles, methods for the manufacturing thereof, and uses thereof.

The method of the invention comprises:
- heating up a volume of a first liquid in a container to a working temperature above a melting temperature (Tₘ) or glass transition temperature (T_{g}) of said polymer, and wherein said first liquid is an essentially non-solvent for at least one of said one or more polymers,
- dispersing an amount of the particles in the first liquid,
- quenching the dispersion of particles to a temperature below the melting temperature or glass transition temperature,
wherein, said quenching comprises mixing a first volume of said dispersion with a second volume of a second liquid, wherein said second liquid is an essentially non-solvent for said at least one of said one or more polymers, and wherein said first liquid and said second liquid form a two phase system, and wherein the density of the second liquid has a density is higher than the density of the first liquid.

## Description

The invention is directed to spherical polymer particles, methods for the manufacturing thereof, and uses thereof in particular in 3D manufacturing techniques.

As will become clear herein below polymer particles find application in a broad number of fields including additive manufacturing methods and coating applications wherein polymer particles may be added for example for optical and or structural reasons.

Powder-based 3D manufacturing techniques such as powder-based 3D printing, *e.g.* SLS (selective laser sintering), typically rely on the formation of a layer of a particulate stating material (particles) which may be locally joined according to a pre-defined pattern to form a product. Particularly suitable in this respect are thermoplastic particles, *e.g.* particles comprising a thermoplastic material) which may be joined (*e.g.* fused) in a local heating process step.

SLS typically uses starting material (particles) comprising a thermoplastic polymer. These may be joined to form a product by local heat source, e.g. irradiation with a laser source according to a pre-defined pattern. Resolution, e.g. edge definition, of formed products is limited by a combination of factors including laser spot size, particle layer thickness, particle properties, material type, particle size and 3D geometry and particle size distribution. Larger products may be made by repeated formation of a starting material layer and locally joining (*e.g.* sintering) thereof according to one or more pre-defined patterns.

The behaviour of the powder is determined to a great extent by the shape and the surface of the single particles. In case of SLS powders, the particles are preferably formed as much as feasible with a spherical shape. This is in order to improve the flowing behaviour, preferably up to an essentially free flowing behaviour. Providing an SLS powder with improved flowing behaviour is advantageous as in the SLS process SLS powders are distributed on part of a bed of an SLS machine by roller or blade systems wherein improved flowing behaviour allows formation of a more compact, *i.e.* dense, layer. Hereby mitigating the need for a separate compacting step. Poor particle flow may further lead to inhomogeneous starting material layer formation, *e.g.* material layers with voids and/or uneven density distribution throughout the layer. Inhomogeneous layers of starting materials and/or layers of starting materials with defects may negatively influence formed product properties and or appearance.

Some polymers may be obtained as a reactor powder, *e.g.* a powder formed during the manufacturing (polymerisation). At present polyamide-12 reactor powders, are commercially available (from Evonik under the name Vestosint®). Polyamide-12 reactor powders comprise a geometry and surface finish which, despite being off-round, provide a flow that is sufficient to enable their direct use as starting material in powder based 3D printing production processes such as SLS. However, other materials, *e.g.* other polymers and/or compound particles comprising polymers and additives need to be manufactured in dedicated processes. These processes typically involve polymerisation and compounding followed by a granulation process and/or milling, grinding, *e.g.* cryo-grinding, to form particulates (powders) to a specified dimension. Preparation of fine polymer powders is typically limited to the production of relatively coarse particles , *i.e.* they comprise a rough surface finish and are irregularly shaped. Irregular shapes, and/or jagged edges and/or rough surface may degrade particle flow properties.

Particle flow properties may be improved by providing the particles with a coating of a flow improving additive. While improving particle flow, such additives remain present in the formed 3D product as impurity and may accordingly degrade material properties, such as strength and appearance. The presence of a coating on the starting material particles may additionally hinder the joining of these particles, e.g. during a local laser induced sintering step.

Preparing of fine polymer particles by precipitating a dissolved polymer from a solvent system by addition of a non-solvent or by cooling or evaporation leads to the formation of porous particles.

US-A-3 503 948 describes a method to produce spherical non-porous polymer particles by a process comprising mixing together a thermoplastic polymer in the form of pieces of fine fibre and a dispersing medium therefor, said dispersing medium being a polymer wetting agent, having a boiling point higher than the melting point of the polymer and being non-solvent for the polymer, followed by heating the resulting mixture to a temperature above the melting point of the polymer fibre, agitating said mixture while keeping the dispersing medium in the liquid phase, and cooling the mixture while continuing agitation to produce a suspension of the particulate, spherical, non-porous polymer product. However, despite claiming to prevent agglomeration of the polymer particles, the resulting polymer particles were clearly formed in a process suffering from extensive agglomeration. The disclosed method reports the formation of relatively large polymer particles with a dimension in the range of 200 to 400 µm using starting particulate material having a dimension in the range of 5 to 35 µm. Judging from the discrepancy between the two dimension formed spherical particles are estimated to be formed from anywhere between two hundred and five hundred thousand particulates of starting material.

Accordingly, despite the efforts in the prior art, there remains a need for the provision of polymer particles that can suitably be used in SLS.

An objective of the invention is to address this need by providing polymer particles, in particular spherical polymer particles.

A further objective of the invention is to provide a method for the manufacturing of such particles.

Yet a further objective of the invention is to mitigate one or more disadvantages observed in the prior art.

The inventors found that one or more of these objectives can, at least in part, be met by preparing polymer particles using a non solvent.

Accordingly, in a first aspect the invention relates to a method for the manufacturing of polymer spheres starting from particles comprising one or more polymers, wherein the method comprises:
- heating up a volume of a first liquid to a working temperature above a melting temperature (Tₘ) or glass transition temperature (T_{g}) of said polymer, and wherein said first liquid is a non-solvent for at least one of said one or more polymers,
- dispersing an amount of the particles in the first liquid,
- quenching the dispersion of particles to a temperature below the melting temperature or glass transition temperature,
wherein said quenching comprises mixing a first volume of said dispersion with a second volume of a second liquid, wherein said second liquid is a non-solvent for said at least one of said one or more polymers, wherein said first liquid and said second liquid form a two phase system, and wherein the density of the second liquid is higher than the density of the first liquid.

In further aspects, the invention is directed to polymer spheres obtainable by a process as described herein. In yet a further aspect, the invention is directed to the use of polymer spheres of the invention in additive manufacturing.

The inventors surprisingly found that the method of the invention allows the preparation of polymer spheres of relatively small dimensions with a high level of sphericity, which consequently possess advantageous flow properties. Thereby, the polymer spheres of the invention are highly advantageous for use in a powder-based manufacturing process (in particular SLS) without the need of further providing one or more flow improving additives such as coatings) to the particles.

Furthermore, it was surprisingly found that the method of the invention is able to mitigate agglomeration of particles during manufacture. By reducing the agglomeration, particles or powders may be prepared from a polymer or compound starting material. In addition, the method of invention allows more control over the dimension and/or size distribution.

As used herein, the term "polymer sphere" is meant to refer to spherical particles that comprise one or more polymers or polymeric materials. Polymers may be synthetic polymers, natural polymers and/or blends thereof.

As used herein the melting temperature and glass transition temperature are provided as examples indicating a transition of a material from a hard state to a more mobile, *e.g.* flexible or liquid state. Thermoplastic materials, *e.g.* thermoplastic polymers, may typically comprise such a transition temperature or temperature range. In contrast, thermoset materials, *e.g.* thermoset polymers may degrade and/or decompose before softening. For a transition of a plastic material from a hard state to a more mobile, *e.g.* flexible or liquid state plastic the temperature need not necessarily be raised above a transition temperature of all of its constituents. For example, for a compound particle plasticity of the particle may be achieved by proving a temperature above a melting or glass transition temperature of the polymer matrix of said compound particle. In other words, plasticity of a compound particle may be provided by heating the particle above a melting or glass transition temperature for the majority (in terms of volume) of its constituents.

The glass liquid transition, or glass transition, may be described as the reversible and gradual transition of solid materials or regions within a material from a hard, *e.g.* glassy state into a viscous or rubbery state upon increasing the temperature. Typically, the glass-transition temperature (T_{g}) of a material characterises the range of temperatures over which this glass transition occurs. The glass transition temperature can be determined using ASTM E1356-08.

The melting point of a material is the temperature at which it changes from a solid state to liquid state and is typically described at atmospheric pressure. The reverse change from liquid to solid, is referred to as the solidification temperature. For polymers this temperature may also be known as the crystallisation temperature. Melting and solidification temperature need not occur at the same temperature. Many materials, including many polymers, may display a form of supercooling. In other words, solidification of a material may occur at lower temperatures than the melting temperature. Because of the ability of some substances to supercool, the solidification point may not considered to be a characteristic property of a substance. Besides visual and refractory methods, DSC may be used to determine a melting temperature of a substance. The melting temperature can be determined using ASTM D3418-15.

Parameters to characterise formed essentially round polymer spheres may comprise size, *e.g.* diameter, particle size distribution, and shape of the particles, *e.g.* deviation from roundness.

The particle size and particle size distribution of polymer spheres can be determined using ASTM E2651-13. The roundness of polymer spheres may be determined using ASTM D7971-15. Alternatively ISO 6318:1985 may be used to describe roundness of polymer spheres.

The particle (sphere) of the invention may have a certain sphericity and/or roundness. Sphericity is a measure of the degree to which a particle approximates the shape of a sphere-like object, and is independent of its size. Roundness is the measure of the sharpness of a particles edges and corners. Sphericity and roundness may be determined based on Wadell's definitions, *i.e.* Wadell's sphericity and roundness indices. Alternatively, simplified parameters and/or visual charts may be used, such as methods that use three-dimensional imaging devices.

The spheres as described herein may have a Wadell's sphericity of 1.00 or less, and 0.80 or more, 0.85 or more, 0.90 or more, or 0.95 or more. In particular, the sphericity of the plastic spheres is 1.00 or less, and 0.85 or more, such as 0.87 or more, or 0.89 or more. Preferably, the sphericity is 1.00 or less, and 0.90 or more, 0.91 or more, 0.92 or more, 0.93 or more, 0.94 or more, or 0.95 or more. More preferably, the sphericity of the sphere is 0.95-1.00. Even more preferably, the plastic sphere has a sphericity of 0.97-1.00. Most preferably, the sphericity is about 1.00.

Alternatively or in addition, the spheres as described herein may have a circularity C, as defined by ISO 9276-6:2008 in excess of 0.90 up to 1.00, preferably in excess of 0.95, more preferably in excess of 0.97. As used herein a non-solvent may be defined as the counterpart of a solvent. A solvent is a substance that dissolves a solute, typically a chemically distinct compound, e.g. a liquid, solid or gas. Solvents and non-solvents are typically liquids but in the context as used herein may also be supercritical fluids. When a particular substance is dissolved into another, a solution is formed, this solution may be characterised by the formation of a single phase system. In a solution, all of the ingredients are uniformly distributed at a molecular level and no residue remains. This is opposed to the situation when the compounds are mutually insoluble and a two-phase system may be formed. A suitable non-solvent for a polymer may be defined as liquid capable of dissolving 0.1 mg/l or less at 20 °C. Preferably dissolving 0.05 mg/l or less at 20 °C temperature, more preferably dissolving 0.01 mg/l or less at 20 °C. Solubility at 20 °C may, for example, be in a range between 0.1 and 0.01 mg/l, preferably in a range between 0.05 and 0.01 mg/l. Most preferably, the capability of the non-solvent to dissolve polymer remains within the above ranges at temperatures up to a softening point, *e.g.* a glass transition temperature (T_{g}) or melting temperature (Tₘ) of the respective polymer. For example, for polystyrene-based polymers water may be classified as a non-solvent.

Without wishing to be bound by any theory, it is believed that the mechanism behind formation of essentially round polymer spheres relates to the formation of a suspension of liquefied droplets in a non-solvent. Such suspension may be made by dispersion of irregularly shaped polymer particles in a non-solvent at a temperature above the melting temperature of said polymer. In such suspension, minimisation of surface energy may lead to the formation of essentially round polymer droplets. After formation of essential round polymer droplets, solid, particulate polymer spheres may be formed by solidification of said polymer droplets. The inventors found that the presence of amounts of non-plasticised (not molten) material in an amount of 50 % or less by total mass of the polymer spheres may be tolerated. Preferably, the total amount of non molten additives is lower, in a range of 25 % or less by total mass of the polymer spheres, such as 10 % or less, or 15 % or less. More preferably, the amount of non molten additives is even lower *e.g.* in a range percent of 5 % or less by total mass of the polymer spheres, *e.g.* 3 % or less, 2 % or less, 1 % or less, 0.5 % or less, or even 0.1 % or less.

Preferably, the size of the formed polymer spheres relates to the size of the polymer particles that were used to form the suspension. In other words, the volume of polymer particles used as starting material, in absence of coagulation, correlates to the volume of formed polymer spheres. Coagulation of liquefied polymer droplets may lead to the formation of larger particles (spheres) . Inventors found that by rapidly cooling the suspension of liquefied polymer droplets coagulation of droplets may be reduced.

In the method of the invention, a non-solvent for the one or more polymers is heated to a temperature above a softening temperature of said polymer. This can be a melting temperature or a glass transition temperature. An amount of polymer particles is added to the non-solvent in order to disperse polymer particles in the non-solvent. The mixture of particles and heated non-solvent may be allowed to equilibrate, forming a suspension of softened polymer particles, *e.g.* molten polymer droplets. After forming the dispersion a second non-solvent is added to the suspension. The second non-solvent forms a two phase system with the first non-solvent. Adding the second non-solvent results in a quenching, *e.g.* a quick temperature drop, of the softened polymer particles, *e.g.* molten polymer droplets, resulting in a hardening, *e.g.* solidification. Advantageously, said hardening results in the formation of the polymer spheres. Formation of hardened spheres may reduce coalescence, *e.g.* merging, of particles in the suspension.

The polymer particles preferably comprise one or more polymers that are in a solid state at room temperature, *e.g.* at temperatures below 25 °C. Preferably, the polymer particles comprise a thermoplastic polymer. Optionally, the thermoplastic polymer may be a thermoplastic elastomer. Said particles may comprise homopolymers, copolymer, or blends of polymers. Suitable polymers include polymers such as: polyacrylics, such as poly(methyl methacrylate) (PMMA); polystyrenes, such as polystyrene (PS); polyamides, such as nylon; polylactic acid (PLA); polycarbonates; polyesters, such as polybutylene terephthalate (PBT) and polyethylene terephthalate (PET), thermoplastic elastomer (TPE), such as thermoplastic urethane (TPU); polyethers, such as polyether ether ketone (PEEK), poly aryl ether ketone (PAEK), polyether ketone ketone (PEKK) and poly(p-phenylene oxide); polythioethers, such as polyphenylene sulfide (PPS); polyimides; polyetherimides, such as polyetherimide (PEI); polyolefins, such as polyethylene (PE) and polypropylene (PP); and halogenated polymers such as polyvinyl chloride (PVC) and polyfluorinated polymers.

Alternatively, or in addition, mixtures of particles comprising a different composition may be used as starting material. Particles may be obtained directly from a manufacturing process, *e.g.* particles may be formed in an emulsion polymerisation process. Alternatively, particles may be obtained by spray drying, *e.g.* drying of droplets of a polymer composition comprising a solvent. Further alternatively, particles may be obtained by mechanical means, *e.g.* milling or grinding of polymer, or by cutting of polymer wires to form a fine powder of said particles. Alternatively, or in addition, fine powders may be obtained directly from a production process. Typically, used polymer particles are irregularly shaped, *e.g.* comprise sharp corners and or edges.

Advantageously, the starting material may comprise one or more thermoplastic polymers, optionally further comprising one or more additives. For example, polymer spheres may be formed from a single type of polymer, a blend of polymers, a compound comprising a single type of polymer and one or more additives, and a compound comprising a blend of polymers and one or more additives. Suitable additives used in polymer chemistry are well known to the person skilled in the art and may, for example, include UV stabilisers, heat stabilisers, plasticisers, colourants (*e.g.* dyes and pigments), flame retardants, and additives to improve mechanical and/or electrical properties of plastic products, such as conductive fibres and reinforcement fibres (typically glass or carbon-based fibres), fillers (typically mineral based fillers), and/or particles.

The non-solvent is a non-solvent for one or more polymers that are comprised in the polymer particles. In other words, the non-solvent may be selected such that particles comprising a multitude of polymer constituents retain their overall shape, *e.g.* the particle does not disintegrate upon mixing with the liquid. Preferably, the non-solvent does not dissolve the greater part of the polymers comprised in the particles. Most preferably, the non-solvent is a non-solvent for most of the constituents comprised in the particles. This may be achieved when 50 % or less by total weight of the constituents of particle dissolves in the non-solvent, preferably 25 % or less, or 10 % or less.

By providing a liquid that is a non-solvent for at least one, preferably most, and more preferably all of the polymers and/or other constituents comprised in the particle, the particle may remain intact upon mixing with said liquid. Optionally, the polymer particles may comprise a comparatively small weight fraction of soluble components. In such event the particle preferably does not disintegrate into smaller particles. Preferably, in excess of 75 wt.%, more preferably in excess of 85 wt.%, most preferably in excess of 95 wt.% of the constituents comprising the particle do not dissolve in said liquid.

Preferably, a suspension of polymer particles is formed. By heating the non-solvent to a temperature above a softening point of the polymer particles the particles will heat upon mixing with said non-solvent. The non-solvent may be heated to a working temperature above a glass transition temperature (T_{g}) of said polymer. The non-solvent may also be heated above a melting temperature (Tₘ) of said polymer. Preferably, the working temperature is 5 °C or more above the softening temperature, *e.g.* melting temperature, of said polymer, preferably 10 °C or more, more preferably 20 °C or more. The higher the working temperature, the faster the particles may melt after formation of the suspension. For example, for polystyrene a suitable working temperature may be in a range between 10 °C and 40 °C above the glass transition temperature, *e.g.* in a range between 100 °C and 140 °C. Alternatively, the working temperature may be in a range between 15 °C and 30 °C above the glass transition temperature, *e.g.* in a range between 105 °C and 130 °C. The working temperature for polymer particles comprising other polymers, such as polylactic acid (PLA) or polyethylene may be adjusted accordingly. For example, for commercially available, low-density polyethylene comprising a melting point typically in a range between 105 °C and 115 °C, a suitable working temperature may be in a range between 115 °C and 155 °C.

Additionally, heating may be continued during and/or after mixing. The mixture may be heated after mixing with the polymer particles. The maximum working temperature may be determined by a decomposition temperature of one or more of the constituents of the solvent and/or polymer particles. For example, the maximum working temperature may be determined by a degradation temperature of the solvent, *e.g.* smoke point, or a degradation temperature of the polymer, *e.g.* a depolymerisation temperature.

Preferably, the working temperature is kept 10 °C or more below a decomposition temperature, preferably 20 °C or more, more preferably 30 °C or more. Alternatively, the maximum working temperature may be determined by a boiling temperature, if any, of the non-solvent. The non-solvent may be a solid at room temperature which melts at a temperature below the working temperature.

After mixing the polymer particles with the non-solvent a suspension of particles dispersed in a liquid phase may form. Using a working temperature above a softening temperature of the polymer particles, *e.g.* a melting temperature of the polymer, may result in melting of polymer particles. By melting the polymer particles, a suspension of liquid droplets of polymer dispersed in a non-solvent, *e.g.* an emulsion may form. The non-solvent preferably has a density which is of the same order as the density of the polymer particle. Selecting a non-solvent with a density much below the density of the polymer particles may lead to poor suspension formation, *e.g.* sedimentation. Selecting a non-solvent with a density much above the density of the polymer particles may lead to poor suspension formation, *e.g.* floatation of polymer particles on top of the non-solvent. Preferably, the non-solvent has a density which deviates from the density of the polymer by no more than a factor 1.1, more preferably no more than 1.05, even more preferably no more than 1.02. In other words, the density of the non-solvent and polymer preferably varies over a range between 0.9 and 1.1, preferably between 0.95 and 1.05, and even more preferably between 0.98 and 1.02.

Exemplary combinations of polymers and liquids, *e.g.* non-solvents, suitable to form a dispersion of particles are listed in Table 1.

**Table 1: Suitable combinations of polymer and non-solvent:**

| polymer | non-solvent |
|---|---|
| PS | aliphatic hydrocarbons |
| | oils |
| | water |
| PMMA | aliphatic hydrocarbons |
| | oils |
| | water |
| PVC | aliphatic hydrocarbons |
| | oils |
| | water |
| PMMA | aliphatic hydrocarbons |
| | oils |
| | water |

Depending on density and/or softening temperature certain polymer liquid (non-solvent) combinations may be preferred. For example, for polystyrene, a preferred dispersion liquid may include high boiling (boiling temperature > 150 °C) aliphatic hydrocarbons, or oils may be preferred, due to relatively similar density with the polymer. For example, natural oils such as, rice bran oil may be particularly suitable. It will be appreciated that the non-solvent may also comprise a mixture of solvents or a mixture of materials that together form a non-solvent.

The dispersion of particles, *e.g.* the dispersion of softened polymer particles, *e.g.* the emulsion of polymer droplets, is quenched to a temperature below the melting or glass transition temperature. By lowering the temperature liquid polymer droplets may solidify and form polymer spheres. By cooling quickly polymer droplets may cool faster which may contribute to conservation of the essentially round shape of the droplet in the cooled polymer sphere. Quenching is achieved by adding a volume of a quenching material to the dispersion of polymer particles. The quenching material is a non-solvent for the polymer and preferably a liquid. A liquid quenching material has the advantage of yielding good heat transfer between the first portion of non-solvent and the quenching liquid may be obtained. By mixing the polymer suspension with a second liquid that is in turn also a non-solvent, dissolution of the polymer in formed polymer spheres may be avoided. Preferably, the temperature and volume of the second portion of non-solvent are selected such that the temperature of the first portion of non-solvent drops rapidly. Preferably, the temperature of the second non-solvent is well below the working temperature of the dispersion, *e.g.* the temperature of the second portion of non-solvent may be 25 °C or less, such as 20 °C or less, 15 °C or less, or 10 °C or less. The higher the amount of quenching liquid that is added, *e.g.* in relation to the amount of the first non-solvent, the faster the suspension may cool. For example, by adding an equal volume of non-solvent which is at room temperature the suspension may be cooled to a temperature mid-way between the working temperature and room temperature. The lower the temperature of the quenching liquid the faster the polymer dispersion may cool to a temperature below the softening temperature of the polymer. Typically, the quenching liquid (second liquid) may be mixed with the suspension (comprising the first liquid) in a volume ratio (V2/V1) of quenching liquid (V2) to suspension (V1) in a range between 0.2 to 10, or 0.3 to 5, or 0.5 to 2 or even in a range close to 1 to 1, whereby at least such a volume is added sufficient to cool the particles in suspension to a temperature at which solidification occurs. In order to minimise of the amount of materials used, and/or to limit the size of required containers, the amount of added quenching liquid may be minimised.

The quenching liquid is a non-solvent for the polymer and forms a two phase system with the first non-solvent. The density of the second non-solvent is higher than the density of the first non-solvent, so that a two phase system may form wherein the quenching liquid forms a bottom phase covered with a layer comprising a suspension of polymer spheres in the first non-solvent. The ratio (ρ1/ρ2) between the density of the first non-solvent (ρ1) and second non-solvent (ρ2) is preferably between 0.5 and 0.97, or between 0.7 and 0.95, or between 0.8 and 0.95, whereby a higher difference in density between the two liquids results in fast formation of a two layer system.

Mixing with a volume of a second liquid may quickly cool the liquefied polymer droplets. For example, pouring the relatively warm emulsion in a second container comprising a volume, *e.g.* equal amount of a relatively cold liquid. Alternatively, an amount of quenching liquid may be added to the relatively warm emulsion. The heat capacity of the amount of second fluid should be sufficient to cool the emulsion. Water may form a particularly suitable quenching fluid due to the large specific heat capacity of water. By selecting the quenching second fluid to be a non-solvent for the polymer and to form a two-phase system with the first liquid a two phase system may form. By using quenching fluid with a higher density than the first non-solvent a two phase system may form wherein the top phase comprises the formed polymer spheres. Holding the formed polymer spheres in the top phase may reduce sedimentation of polymer spheres, *e.g.* to the bottom of a container, e.g. sticking of spheres on the bottom of the container. Since formed plastic spheres remain at the interface between the first and second liquid it may further be preferred to provide a sufficiently high ratio of surface area to number of particles to avoid particle collision at the interface. This may, for example be achieved by selecting a wide container.

Preferably, the method to prepare polymer spheres comprises agitating the first liquid with dispersed particles for a period of time before quenching the suspension. Allowing some time, before quenching the suspension may allow complete softening, *e.g.* melting of the polymer particles. Agitation may help in stabilising the suspension, *e.g.* agitation may help in redispersing particles attached or sedimented onto the container walls and/or bottom. Increasing the agitation energy may reduce particle sedimentation. Agitation may also increase the momentum of particles in suspension. The number of droplet/particle interactions and/or droplet/droplet interactions in relation to the speed, *e.g.* momentum, at which such interactions occur may correlate to the chance, or rate at which coalescence occurs. In other words, agitation may increase particle and/or droplet momentum in the suspension and may thereby increase the rate of coalescence. Typically, it is preferred to mitigate particle coalescence. In case the object is to manufacture polymer spheres with a small dimension, *e.g.* a dimension correlating to the volume of the polymer starting particles, it may be beneficial to avoid coalesce. On one hand increasing agitation energy may reduce sedimentation and improve redispersion of particles in suspension. On the other hand excessive agitation will increase particle coalescence. Therefore an optimum in the amount, *e.g.* level, of agitation exists that may be applied to the suspension. Experimentally, it was found that high energy agitation, such as sonication may lead to an increased rate of coalescence, as indicated by an increased diameter of formed polymer spheres. Accordingly, high speed mixing, *e.g.* using a static rotor at a rate, for example in excess of 500 rpm may also lead to coalescence. Low energy mixing on the other hand was found to mitigate the problem of coalescence while still sufficiently mitigating sedimentation. Low energy mixing may, for example be achieved by low speed stirring. For example using a magnetically driven stirring bar. Alternatively, agitation and/or redispersion of sedimented particles may be achieved by creating a circulation flow in the container. Such circulation flow may even be formed as a result of naturally occurring thermal convection within the container. Thermal convection, *e.g.* flow in the container, may for example be a result of temperature differences, *e.g.* between a heated bottom of the container and a cooler side-wall of the container. Alternatively or in addition agitation may be provided by swerving or tilting of the container. Further agitation may be provided by circulating part of the contents of the container by means of a pumping mechanism. In this case a suitable pump should be selected to avoid coalescence within the pump. Typically, pumps comprising a narrowing section and/or pumps relying on increasing the velocity of the pumped fluid, may increase the coalescence rate. Slow moving positive displacement pumps, such as rotating screw pumps or rotating vane pumps, may be suitable. It will be appreciated that the method and/or level of agitation may also depends on the concentration of particles, *e.g.* the polymer loading, in suspension.

The concentration of particles may be 5 % or less, based on the total volume of the dispersion, preferably 2 % or less, *e.g.* 0.05-1 %, whereby the lower limit may be defined by economical viability motifs. Increasing the concentration of particles may increase the output rate of the method, *e.g.* increase production rate. Decreasing the concentration may reduce unwanted collisions and/or coalescence of particles during the process, *e.g.* improve product quality.

Inventors found that the volume fraction of the powder can be used to control the particle size distribution. It is believed that, with increasing powder volume fraction, the probability of particles colliding becomes higher, which increases the probability of two or multiple particles coalescing together.

The method of the invention may further comprise a separation step. The separation step may involve filtering. Preferably, formed polymer spheres may be passed one or more times over a filter. Said filter can be selected from a group of filters with mesh of, for example, ten micro meter (µm), forty micro meter (µm), one hundred micro meter (µm), one hundred and seventy micro meter (µm), and two hundred and fifty micro meter (µm). It will be appreciated that selection of the mesh is not to be restricted to above numbers, filters with mesh different meshes may be selected, *e.g.* depending of the size of formed polymer spheres. For example, filters may be selected with a mesh in a range of 5-20 µm, 10-40 µm, 25-100 µm, 50-200 µm, or 150-300 µm. By passing formed polymer spheres over a series of filters, wherein the polymer spheres are passed sequentially over at least two filters with different mesh size, formed polymer spheres may be separated by size, forming batches of polymer spheres with a more narrow size distribution. For example, an amount of suspension comprising polymer spheres in a broad size distribution, may be passed through a tube equipped with a series of filters spaced at a distance from one another, whereby the suspension sequentially passes over filters with decreasing mesh size. It will be appreciated, that alternatively, other methods for size separation, *e.g.* microfluidic methods and/or centrifugation may be used. Additionally, or optionally, the starting material, *e.g.* polymer particles, may be separated by size before sphere formation. By providing a starting material with increasingly more uniform size distribution, polymer spheres may be manufactured with an increasingly more uniform size distribution.

Commonly used metrics when describing particle size distributions are D-Values (D₁₀, D₅₀, D₉₀ and D₉₅) which are the intercepts for 10 %, 50 %, 90 % and 95 % of the cumulative mass. Accordingly, the formed polymer spheres may be characterised by their size distribution with D₉₅ of 1-200 µm, preferably between 1-100 µm. Depending on the intended application, *e.g.* a SLS, and/or intended product resolution and/or surface finish the formed polymer spheres may be characterised by other size distributions. Advantageously, the present method allows for the manufacturing of polymer spheres over a broad range of size distributions including distributions with a D₉₅ in a range between 20-80 µm, 30-70 µm, or 40-60 µm.

The polymer sphere may further comprise one or more additives. Suitable additives used in polymer chemistry are well-known to the person skilled in the art and may, for example, include UV stabilisers, heat stabilisers, plasticisers, colourants (*e.g.* dyes and pigments), flame retardants, fillers, and additives to improve mechanical and/or electrical properties of plastic products, such as (conductive) fibres, reinforcement fibres, and/or particles. As such, polymer spheres may, for example, be formed from a single type of polymer, a compound comprising a blend of polymers, a compound comprising a single type of polymer and one or more additives, and a compound comprising a blend of polymers and one or more additives. The polymer sphere may further comprise fillers, *e.g.* conductive particles or wires. Alternatively, or in addition, additives may be added to the first non-solvent. Adding, suspension agents may, for example, improve the stability of formed suspensions. Advantageously, improved stability of the suspension may contribute to mitigating the coalescence of liquefied droplets and/or particles. Advantageously, addition of additives may allow application of higher agitation energies and/or allow higher volumetric loading of polymer particles in the suspension.

The method of the invention may comprise one or more washing steps to remove residues from the surface of formed essentially round polymer particles. Preferably, formed polymer spheres may be washed while disposed on the one or more filters used in the separation step. For example, polystyrene spheres may be washed with a solution, *e.g.* water, comprising a surfactant. Alternatively, or in addition, the polymer spheres may be rinsed with ethanol. Optionally, the spheres may be further washed with washing liquids (such as water) to remove detergent residues. It will be appreciated that the above washing steps are exemplary and should not be interpreted as limiting steps. Other, or further washing steps may be used, *e.g.* depending of the type of polymer spheres and the type of non-solvent and quenching liquid that are used. Further, formed polymer spheres may be dried after washing. For example, by drying in an oven.

The method of the invention may be a continuous production process wherein one or more, preferably all of:
- heating up a volume of a first liquid to a working temperature above a melting temperature (Tₘ) or glass transition temperature (T_{g}) of said polymer, and wherein said first liquid is a non-solvent for at least one of said one or more polymers;
- dispersing an amount of the particles in the first liquid;
- quenching the dispersion of particles to a temperature below the melting temperature or glass transition temperature, and;
- agitating the first liquid with dispersed particles,
is/are performed in a continuous way, using a continuous flow of first liquid, using a low shear mixer, *e.g.* a static mixer or motionless mixer. In such a continuous process the static mixer or motionless mixer are preferred over rotors/agitators due to the relatively low shear they impose on the dispersed phase. The residence time of dispersion comprising plastic particles in the mixer needs to be larger than the shape relaxation time. The residence time may optionally be controlled by providing a static mixer or motionless mixer with a suitable aspect ratio. In other words controlling the length of the mixer in relation to the flow rate. Alternatively or in addition control over the relaxation time may be provided by the number of mixing elements used in the process.

The present invention further relates to polymer spheres obtainable by the method of the invention. The polymer spheres may be characterised in that the spheres comprise uncross-linked polymers. In other words, formed polymer spheres may be molten at elevated temperatures, *e.g.* by exposing the spheres to a temperature above the melting temperature of the polymer. In contrast, in commercially available polymer particles, polymer constituents may be cross-linked and as a result such particles may degrade before melting. The amount of cross-linked polymers in the polymer spheres of the invention can, for instance, be 15 % or less by total weight of the polymer sphere, such as 10 % or less, preferably 5 % or less, more preferably 2 % or less, even more preferably 1 % or less. Providing polymer spheres comprising non cross-linked polymer is advantageous in applications such as in a Selective Laser Sintering (SLS) 3D printing wherein, flowability of the polymer defines the final part properties. In such applications it is undesirable to have crosslinking of thermoplastic particles as this leads to higher viscosity, thereby reducing the flow during the laser sintering process.

As mentioned herein, the polymer spheres may have a Wadell's sphericity of 0.50-1.00, preferably 0.90-1.00, more preferably 0.95-1.00, even more preferably 0.97-1.00.

As mentioned herein, the polymer spheres may have a circularity C, as defined by ISO 9276-6:2008 in excess of 0.90 up to 1.00, preferably in excess of 0.95, more preferably in excess of 0.97.

As mentioned herein, the process according to the invention may be characterised by substantial absence of surfactant in the steps up to the forming of the solid particles. For example, the amount of surfactant used in the method of the invention may be 0.05 % or less by total weight of the dispersion of particles, preferably 0.01 % or less, even more preferably 0.001 % or less. In an embodiment, the process of the invention is performed in the absence of surfactant. Likewise, formed polymer spheres may be characterised by substantial absence of surfactant. Accordingly, the amount of surfactant present in the polymer spheres may be 0.05 % or less by total weight of the polymer spheres, preferably 0.01 % or less, even more preferably 0.001 % or less. In an embodiment, the polymer spheres are free from surfactant. In contrast, particles formed in an emulsion process are during the formation, *e.g.* during a liquefied state, stabilised with a surfactant. Accordingly, formed particles typically comprise amounts of stabilising surfactant.

Further, the process according to the invention may be applied to polymeric starting materials having a high melt viscosity. Known particle forming methods such as spray drying may be unsuited for polymer materials having a high melt viscosity, for example already since the time to form a spherical particle inside a spray drying column is limited. In contrast in the method of the invention roundness of slow flowing materials may be regulated by adjusting the contact time.

Formed polymer spheres can have a diameter of 100 µm or less, preferably 50 µm or less, such as 25 µm or less. The lower size limit of the formed polymer spheres may correlate to the volume of the polymer particles used as starting material. For example, a polymer particle with a volume of 4000 µm³ may be processed to form a polymer sphere with a diameter in the order of 20 µm, whereas an irregularly shaped polymer particle with a volume of 50 000 µm³, for example resulting from the grinding of larger polymer particles, may form a polymer sphere with a diameter of about 45 µm. Typically, the polymer spheres have a diameter of 1 µm or more, such as 5 µm or more.

The present invention further relates to the use of formed polymer spheres in additive manufacturing methods and to three-dimensional products obtained by additive manufacturing methods , in particular powder-based additive manufacturing methods. Advantageously, formed polymer spheres may comprise a combination of roundness and small diameter which allows the formation of polymer objects with improved resolution and/or surface finish. Particularly, selective laser sintering methods may benefit from using the disclosed polymer spheres. Advantageously, use of particles with small diameter, *e.g.* a diameter in a range between 10-100 µm may allow the formation of products with fine details. Obtaining objects with fine details may be facilitated by the use of polymer spheres having a narrow size distribution. Advantageously, particles with narrow size distribution may allow good, *e.g.* dense, stacking of said particles and accordingly allow for the formation of products with less defects. Use of a mixture of particles with a bimodal size distribution may improve dense stacking, *e.g.* the particles with smaller dimensions filling gaps between a packing of particles with a larger dimension.

The present disclosure further relates to the use of formed essentially round polymer particles for example as additives in, for example, paint compositions. Further, formed particles may find particular benefit as application as tracer particles, *e.g.* markers, in biomedical applications.

For the purpose of clarity and a concise description, features are described herein as part of the same or separate embodiments, however, it will be appreciated that the scope of the invention may include embodiments having combinations of all or some of the features described. The various elements of the embodiments as discussed and shown offer certain advantages, such as reducing particle coalescence by selecting a quenching liquid with a high density. Of course, it is to be appreciated that any one of the above embodiments or processes may be combined with one or more other embodiments or processes to provide even further improvements in finding and matching designs and advantages. For example, other quenching methods, as of yet unforeseen may be applicable as well. It is appreciated that this invention offers particular advantages to applications benefitting from the use of small, polymer spheres such as selective laser sintering, and in general can be applied for any application wherein a need for the use of such particles exists.

Likewise it will be understood that when a connection between structures or components is described, this connection may be established directly or through intermediate structures or components unless specified otherwise.

In interpreting the appended claims, it should be understood that the word "comprising" does not exclude the presence of other elements or acts than those listed in a given claim; the word "a" or "an" preceding an element does not exclude the presence of a plurality of such elements. It will be understood that the terms "comprises" and/or "comprising" specify the presence of stated features but do not preclude the presence or addition of one or more other features. It will be further understood that when a particular step of a method is referred to as subsequent to another step, it can directly follow said other step or one or more intermediate steps may be carried out before carrying out the particular step, unless specified otherwise. Where one claim refers to another claim, this may indicate synergetic advantage achieved by the combination of their respective features. But the mere fact that certain measures are recited in mutually different claims does not indicate that a combination of these measures cannot also be used to advantage. The present embodiments may thus include all working combinations of the claims wherein each claim can in principle refer to any preceding claim unless clearly excluded by context.

The disclosure will now be further illustrated below in and by a few examples. The percentages in the examples are percentages by volume, based on the total volume unless otherwise specified.

The present invention will be further elaborated with reference to the following examples.

### Examples

All materials were uses as received without prior purification, unless otherwise indicated. For all examples stirring was performed in a beaker glass using a top-down rotor provided with an agitator formed of two parallel stirring rods.

### Example 1: Spherical particles from polyamide 12

Polyamide 12 (PA12) by Vestamide, unfilled, in pellet form was used as received. Pellets were reduced to a coarse powder by rotor milling at 14 000 rpm. This powder was subjected to refinement by sieving using a metallic mesh (500 µm), resulting in a powder with particle size smaller than 500 µm.

In a 100 ml beaker glass about 50 ml of sunflower oil was heated to 220 °C, 40 °C above the melting temperature of the PA12. Once the temperature was attained, the stirrer was set at around 200 rpm and 10 mg of PA12 powder was added to the oil and a suspension of PA12 in sunflower oil was formed. The suspension was stirred for 2 minutes. Subsequently, the contents of the beaker were poured in a flask with 250 ml of water, at room temperature.

Then the contents of the flask were poured through a sieving column containing metallic meshes of different sizes (10 µm, 100 µm, 175 µm and 400 µm) to separate formed particles by size and to remove the majority of oil and water. To clean the particles from oil, 500 ml of a 5 v/v % surfactant solution (Vanish) in water and 1l of water were flushed over the column. Subsequently, washed particles were rinsed with 10 ml of ethanol to remove residual oil from the particle surface.

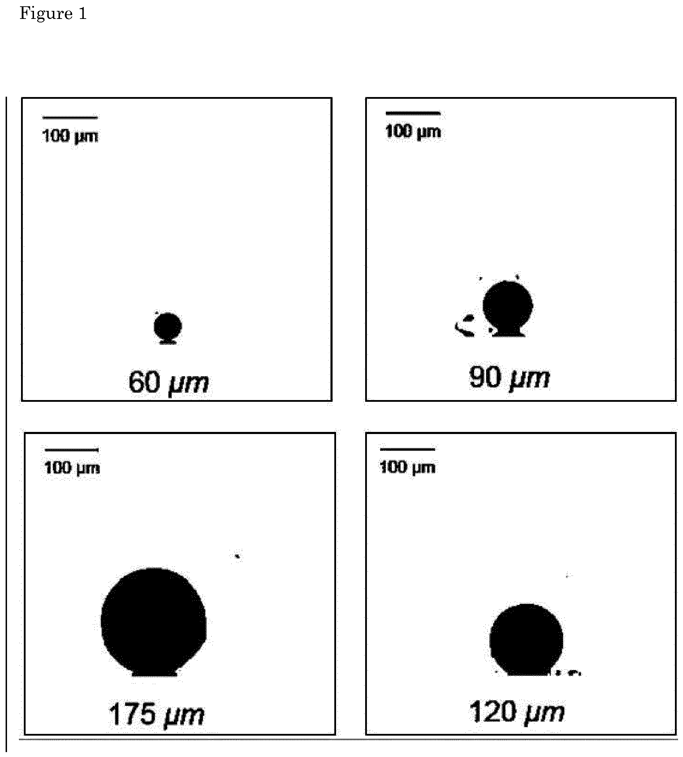

Figure 1 depicts exemplary micrographs of obtained PA12 spheres.

### Example 2: Spherical particles from polystyrene

Polystyrene (PS) from Sigma Aldrich, unfilled, in pellet form was used as received. Pellets were reduced to a coarse powder by rotor milling at 14 000 rpm. This powder was subjected to refinement by sieving using a metallic mesh (500 µm), resulting in a powder with particle size smaller than 500 µm.

In a 100 ml beaker glass about 50 ml of sunflower oil was heated to 150 °C, 90 °C above the glass transition temperature of the PS. Once the temperature was attained, the stirrer was set at around 200 rpm and 10 mg of PS powder was added to the oil and a suspension of PS in sunflower oil was formed. The suspension was stirred for 2 minutes. Subsequently, the contents of the beaker were poured in a flask with 250 ml of water, at room temperature.

Then the contents of the flask were poured through a sieving column containing metallic meshes of different sizes (10 µm, 100 µm, 175 µm and 400 µm) to separate formed particles by size and to remove the majority of oil and water. To clean the particles from oil, 500 ml of a 5 v/v % surfactant solution (Vanish) in water and 1l of water were flushed over the column. Subsequently, washed particles were rinsed with 10 ml of ethanol to remove residual oil from the particle surface.

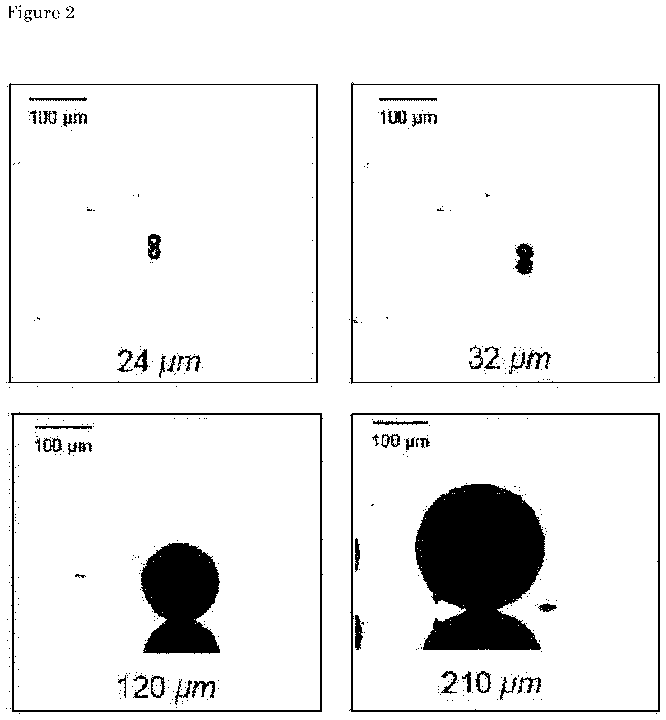

Figure 2 depicts exemplary micrographs of obtained polystyrene spheres.

### Example 3: Spherical particles from low-density polyethylene

Low-density polyethylene (LDPE) with additives, in pellet form was used as received. Pellets were reduced to a coarse powder by rotor milling at 14 000 rpm. This powder was subjected to refinement by sieving using a metallic mesh (500 µm), resulting in a powder with particle size smaller than 500 µm.

In a 100 ml beaker glass about 50 ml of rice bran oil was heated to 230 °C, 110 °C above the melting temperature of the LPDE. Once the temperature was attained, the stirrer was set at around 200 rpm and 10 mg of LDPE powder was added to the oil and a suspension of LDPE in rice bran oils was formed. The suspension was stirred for 4 minutes. Subsequently, the contents of the beaker were poured in a flask with 250 ml of water, at room temperature.

Then the contents of the flask were poured through a sieving column containing metallic meshes of different sizes (10 µm, 100 µm, 175 µm and 400 µm) to separate formed particles by size and to remove the majority of oil and water. To clean the particles from oil, 500 ml of a 5 v/v % surfactant solution (Vanish) in water and 1l of water were flushed over the column. Subsequently, washed particles were rinsed with 10 ml of ethanol to remove residual oil from the particle surface.

### Example 4: Spherical particles from polypropylene

Polypropylene (PP), with additives, in pellet form was used as received. Pellets were reduced to a coarse powder by rotor milling at 14 000 rpm. This powder was subjected to refinement by sieving using a metallic mesh (500 µm), resulting in a powder with particle size smaller than 500 µm.

In a 100 ml beaker glass about 50 ml of coconut oil was heated to 255 °C, 105 °C above the melting temperature of the PP. Once the temperature was attained, the stirrer was set at around 200 rpm and 10 mg of PP powder was added to the oil and a suspension of PP in coconut oil was formed. The suspension was stirred for 5 minutes. Subsequently, the contents of the beaker were poured in a flask with 250 ml of water, at room temperature.

Then the contents of the flask were poured through a sieving column containing metallic meshes of different sizes (10 µm, 100 µm, 175 µm and 400 µm) to separate formed particles by size and to remove the majority of oil and water. To clean the particles from oil, 500 ml of a 5 v/v % surfactant solution (Vanish) in water and 1l of water were flushed over the column. Subsequently, washed particles were rinsed with 10 ml of ethanol to remove residual oil from the particle surface.

The circularity C of formed polypropylene spheres was determined for each of the fractions obtained after sieving. A first fraction with an average diameter of 25 µm was found to have a circularity of 0.986 ± 0.009, a second fraction with an average diameter of 79 µm was found to have a circularity of 0.987 ± 0.010, a third fraction with an average diameter of 167 µm was found to have a circularity of 0.985 ± 0.012, a fourth fraction with an average diameter of 311 µm was found to have a circularity of 0.994 ± 0.006.

### Example 5: Spherical particles with carbon nanotube reinforcement fibres

Polyamine 12 with carbon nanotube reinforcement fibres (PA12-CNT), in pellet form was used as received. Pellets were reduced to a coarse powder by rotor milling at 14 000 rpm. This powder was subjected to refinement by sieving using a metallic mesh (500 µm), resulting in a powder with particle size smaller than 500 µm.

In a 100 ml beaker glass about 50 ml of coconut oil was heated to 250 °C, 70 °C above the melting temperature of the PA12-CNT. Once the temperature was attained, the stirrer was set at around 200 rpm and 10 mg of PP powder was added to the oil and a suspension of PP in coconut oil was formed. The suspension was stirred for 3 minutes. Subsequently, the contents of the beaker were poured in a flask with 250 ml of water, at room temperature.

Then the contents of the flask were poured through a sieving column containing metallic meshes of different sizes (10 µm, 100 µm, 175 µm and 400 µm) to separate formed particles by size and to remove the majority of oil and water. To clean the particles from oil, 500 ml of a 5 v/v % surfactant solution (Vanish) in water and 1l of water were flushed over the column. Subsequently, washed particles were rinsed with 10 ml of ethanol to remove residual oil from the particle surface.

## Claims

1. Method for the manufacturing of polymer spheres starting from particles comprising one or more polymers, wherein the method comprises:
- heating up a volume of a first liquid to a working temperature above a melting temperature (Tₘ) or glass transition temperature (T_{g}) of said polymer, and wherein said first liquid is a non-solvent for at least one of said one or more polymers,
- dispersing an amount of the particles in the first liquid,
- quenching the dispersion of particles to a temperature below the melting temperature or glass transition temperature,
wherein said quenching comprises mixing a first volume of said dispersion with a second volume of a second liquid, wherein said second liquid is a non-solvent for said at least one of said one or more polymers, wherein said first liquid and said second liquid form a two phase system, and wherein the density of the second liquid is higher than the density of the first liquid.

2. Method according to claim 1, wherein the method comprises agitating the first liquid with dispersed particles.

3. Method according to claim 1 or 2, wherein said one or more polymers comprises a thermoplastic polymer.

4. Method according to claim any one of claims 1-3, further comprising
i) separating formed polymer spheres from first and second liquids, and/or
ii) milling or grinding of the particles to form a fine powder of said particles.

5. Method according to any one of claims 1-4, wherein said particles further comprise one or more additives, preferably selected from the group consisting of colorants, plasticisers, flame retardants, reinforcement agents and fillers.

6. Method according to any one of claims 1-5, wherein said method is a continuous production process.

7. Polymer spheres obtainable by a method according to any one of claims 1-6.

8. Polymer spheres, preferably according to claim 7, wherein the spheres comprise one or more thermoplastic polymers and wherein the spheres have a Wadell's sphericity of 0.80-1.00, preferably 0.90-1.00, more preferably 0.95-1.00, even more preferably 0.97-1.00.

9. Polymer spheres, according to any one of claims 7 or 8, wherein the amount of surfactant present in the polymer spheres is 0.05 % or less by total weight of the polymer spheres, preferably 0.01 % or less, even more preferably 0.001 % or less, and wherein most preferably, the polymer spheres are free of surfactant.

10. Polymer spheres according to any one of claims 7-9, wherein the plastic spheres have a particle size distributions with D₉₅ of 1-200 µm, preferably 1-100 µm.

11. Polymer spheres according to any one of claims 7-10, wherein the spheres have a bimodal particle size distribution.

12. Polymer spheres according to any one of claims 7-11, wherein the spheres are formed of a compound comprising:
- two or more thermoplastic polymers, or
- one or more thermoplastic polymers and one ore more additives selected from a group consisting of: flame retardants, heat stabilisers, colourants, UV stabilisers, plasticisers, fillers, and reinforcing additives.

13. Polymer spheres according to any one of claims 7-12, wherein the particles are obtained by grinding the one or more polymers.

14. Use of polymer spheres according to any one of claims 7-13 in additive manufacturing methods, such as selective laser sintering.

15. A three-dimensional product obtained by an additive manufacturing process, such as selective laser sintering, using polymer spheres according to any one of claims 7-13.
